# FASCICULE DE BREVET EUROPEEN

(11) **EP 3 754 282 B1**
(45) Date de publication et mention de la délivrance du brevet: **04.08.2021**
(21) Numéro de dépôt: 20174650.0
(22) Date de dépôt: 14.05.2020
(51) Int. Cl.: F28D 15/02, F28D 21/00, F28D 7/16, F28F 27/02, G05D 23/08

(54) **SYSTEME D ECHANGEUR THERMIQUE AVEC UN SYSTEME PASSIF POUR LE CONTROLE DU FLUX**
WÄRMETAUSCHERSYSTEM MIT EINEM PASSIVEN SYSTEM ZUR KONTROLLE DES STROMS
HEAT EXCHANGER SYSTEM WITH A PASSIVE SYSTEM FOR CONTROLLING FLOW

(30) Priorité: 21.06.2019 FR 1906706
(43) Date de publication de la demande: 23.12.2020
(73) Titulaire: AIRBUS OPERATIONS (S.A.S.), 31060 Toulouse (FR)
(72) Inventeur: ZEBIAN, Maxime, 31060 TOULOUSE Cedex 9 (FR)
(74) Mandataire: Sarraméa, Claude

(56) Documents cités:
- EP-A1- 3 023 724
- JP-A- 2011 144 900
- US-A1- 2011 067 853
- US-A1- 2019 040 969

## Description

La présente invention concerne un système d'échangeur thermique qui assure un échange thermique entre deux fluides et qui comporte un système passif qui assure le contrôle du flux de l'un des fluides, un turboréacteur d'aéronef comportant un tel système d'échangeur thermique, ainsi qu'un aéronef comportant un tel turboréacteur. Un système selon le préambule de la revendication 1 est décrit dans JP 2011 144900 A.

Un aéronef comporte classiquement au moins un turboréacteur à double flux qui présente un canal de soufflante dans lequel un flux d'air extérieur est aspiré avant d'être divisé en un flux primaire qui traverse le cœur du moteur et un flux secondaire qui s'écoule autour du cœur du moteur. Le flux primaire et le flux secondaire se regroupent à l'arrière au niveau de la tuyère d'éjection.

La température du cœur du moteur est relativement élevée, et il est nécessaire de mettre en place des échangeurs thermiques qui assurent que la température ne dépasse pas un seuil afin de préserver les différents composants du turboréacteur ainsi que les fluides (huile, combustible, air) qui y circulent.

La régulation thermique nécessite également un premier fluide et un deuxième fluide qui pénètrent dans l'échangeur thermique afin d'échanger des calories entre eux et qui en ressortent après cet échange. La quantité de fluide qui pénètre est généralement commandée par des valves qui sont contrôlées par une unité de contrôle à partir des informations fournies par un capteur de température qui mesure la température de l'un des fluides.

Si une telle installation donne de bons résultats, elle nécessite la mise en place de valves et de capteurs de température ainsi que d'une unité de contrôle programmée afin de commander les valves.

Il est donc nécessaire de trouver un arrangement différent qui simplifie l'installation.

Un objet de la présente invention est de proposer un système d'échangeur thermique qui comporte un échangeur thermique qui assure un échange thermique entre deux fluides et un système passif qui assure le contrôle du flux de l'un des fluides.

A cet effet, est proposé un système d'échangeur thermique tel que revendiqué dans la revendication 1.

Une telle architecture permet ainsi un contrôle passif du flux de l'un des fluides à partir de la température de l'autre fluide.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La figure 1 est une vue de côté d'un aéronef comportant un turboréacteur selon l'invention,
La figure 2 est une représentation schématique du principe mis en œuvre dans un système d'échangeur thermique selon l'invention,
La figure 3 est une vue de côté et en coupe d'un canal de soufflante d'un turboréacteur équipé d'un système d'échangeur thermique selon l'invention, et
La figure 4 est un agrandissement du détail IV de la figure 3 qui montre un mode de réalisation particulier du système d'actionnement du système d'échangeur thermique selon l'invention.

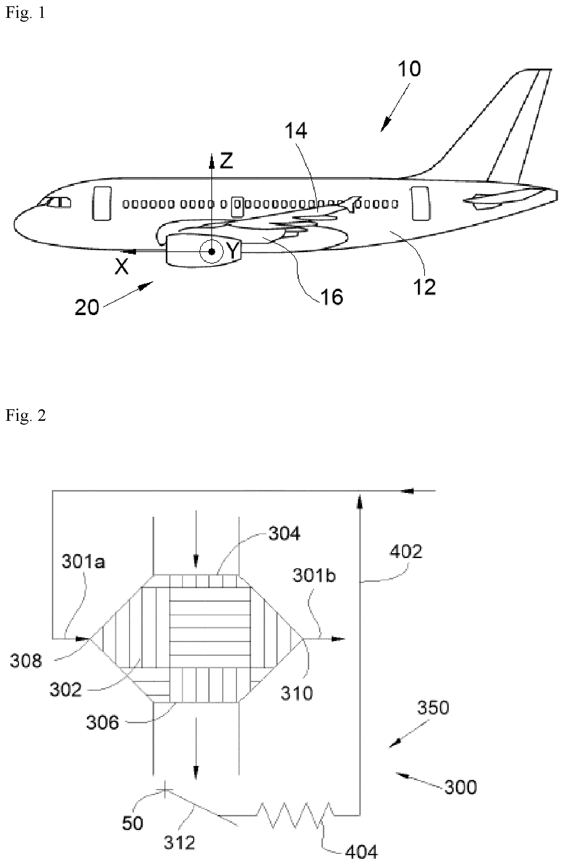

En relation avec la figure 1, un aéronef 10 comporte un fuselage 12 de chaque côté duquel est fixée une aile 14 qui porte au moins un turboréacteur 20, en particulier un turboréacteur double flux.

La fixation du turboréacteur 20 sous l'aile 14 s'effectue par l'intermédiaire d'un mât 16.

Dans la description qui suit, et par convention, on appelle X la direction longitudinale de l'aéronef 10 et orientée positivement vers l'avant de l'aéronef 10, on appelle Y la direction transversale qui est horizontale lorsque l'aéronef est au sol, et Z la direction verticale, ces trois directions X, Y et Z étant orthogonales entre elles.

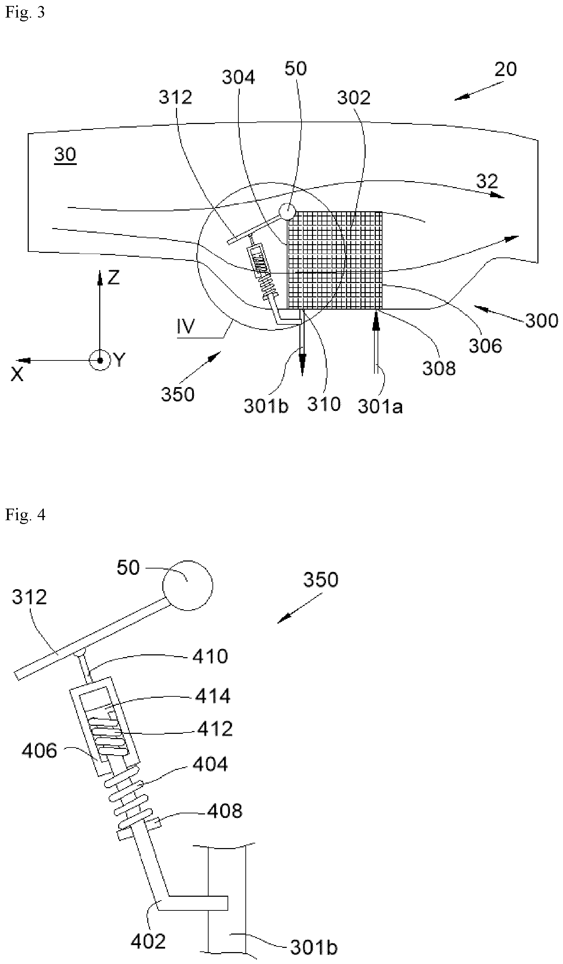

Le turboréacteur 20 comporte classiquement un canal de soufflante dans lequel un flux d'air extérieur pénètre avant d'être divisé en un flux primaire et un flux secondaire. La figure 3 montre le canal de soufflante 30 dans lequel circule un flux d'air extérieur 32 qui circule de l'avant vers l'arrière.

Le turboréacteur 20 comporte un système d'échangeur thermique 300 qui comporte un échangeur thermique 302 logé dans le canal de soufflante 30. L'échangeur thermique 302 présente une première entrée 304 pour un premier fluide, une première sortie 306 pour le même premier fluide, une deuxième entrée 308 pour un deuxième fluide et une deuxième sortie 310 pour le même deuxième fluide.

Le turboréacteur 20 comporte également ici un réseau de canalisations 301a-b dans lequel circule un fluide, en particulier de l'huile moteur.

Dans le mode de réalisation de la figure 3, le premier fluide est l'air circulant dans le canal de soufflante et le deuxième fluide est l'huile moteur circulant dans des canalisations 301a-b, à savoir une canalisation entrante 301a qui amène l'huile moteur au niveau de la deuxième entrée 308 et une canalisation sortante 301b qui reçoit l'huile moteur au niveau de la deuxième sortie 310. Bien sûr, la canalisation entrante 301a et la canalisation sortante 301b se prolongent l'une l'autre à travers l'échangeur thermique 302.

L'échangeur thermique 302 peut être de tous types, comme par exemple à plaques et il assure un échange de calories entre le premier fluide et le deuxième fluide sans que ces deux fluides entrent directement en contact l'un avec l'autre.

Le système d'échangeur thermique 300 comporte également un moyen d'obturation 312 qui est mobile et agencé pour obturer plus ou moins la première entrée 304 ou la première sortie 306 en fonction de la position qu'il prend. Dans le mode de réalisation de la figure 3, le moyen d'obturation 312 prend la forme d'un volet monté mobile en rotation sur la structure du turboréacteur 20 et qui est positionné devant la première entrée 304 afin de l'obturer plus ou moins. Le volet 312 est ici monté mobile en rotation autour d'un axe de rotation 50 qui est ici parallèle à la direction transversale Y. Selon la position du moyen d'obturation 312, il peut y avoir une obturation complète ou une ouverture complète de la première entrée 304 ou de la première sortie 306 ou une ouverture/obturation partielle entre ces deux positions extrêmes. Le système d'échangeur thermique 300 comporte également un système d'actionnement 350 dont un mode de réalisation particulier est montré sur la figure 4.

Le système d'actionnement 350 comporte un caloduc 402 qui est fermé et rempli d'un fluide caloporteur comme par exemple de l'eau ou de l'alcool, dont une première extrémité plonge dans le deuxième fluide.

Dans le mode de réalisation de l'invention représenté à la figure 3, la première extrémité plonge dans le deuxième fluide au niveau de la deuxième sortie 310, mais il est possible de disposer la première extrémité dans le deuxième fluide au niveau de la deuxième entrée 308.

Le système d'actionnement 350 comporte également un élément 404 à mémoire de forme, c'est-à-dire qu'il a la possibilité d'alterner entre deux formes lorsque sa température varie de part et d'autre d'une température seuil.

Dans le mode de réalisation de l'invention présenté à la figure 4, l'élément 404 à mémoire de forme prend la forme d'un ressort dont la longueur va se modifier en fonction de sa température. L'élément 404 à mémoire de forme est en contact thermique avec le caloduc 402 et il est arrangé de manière à déplacer le moyen d'obturation 312 en fonction de sa température, c'est-à-dire en fonction de la température du caloduc 402 et donc du deuxième fluide. On entend par « contact thermique » le fait qu'une variation de température du caloduc 402 entraîne une variation dans le même sens de la température de l'élément 404 à mémoire de forme, ils peuvent ainsi être en contact physique direct ou ils peuvent être à distance l'un de l'autre.

Ainsi, en fonction de la température du deuxième fluide, l'élément 404 à mémoire de forme conserve ou modifie sa forme et en cas de modification de sa forme, il déplace le moyen d'obturation 312 afin de laisser passer plus ou moins le premier fluide à travers l'échangeur thermique 302. Un tel arrangement est donc un système passif, relativement simple à mettre en œuvre et ne nécessite pas d'autres éléments dédiés comme des vannes ou une unité de contrôle. Une telle architecture permet ainsi un contrôle passif du flux du premier fluide à partir de la température du deuxième fluide.

Dans le mode de réalisation de la figure 4, le système d'actionnement 350 comporte un coulisseau 406 qui est mobile en translation le long du caloduc 402, où l'élément 404 à mémoire de forme prend la forme d'un ressort de compression qui est arrangé autour du caloduc 402 entre le coulisseau 406 et une première butée 408 fixe du système d'actionnement 350.

Le coulisseau 406 est solidaire du moyen d'obturation 312, ici un volet, par l'intermédiaire d'une tringle articulée 410.

Lorsque la température de l'élément 404 à mémoire de forme augmente, sa longueur augmente et il repousse le coulisseau 406 qui ouvre le volet 312 pour permettre à une plus grande quantité du premier fluide d'entrer dans l'échangeur thermique 302.

Lorsque la température de l'élément 404 à mémoire de forme diminue, sa longueur diminue et il ne repousse plus le coulisseau 406 qui peut rebrousser chemin le long du caloduc 402 et le volet 312 peut se refermer pour limiter le flux du premier fluide entrant dans l'échangeur thermique 302.

Bien sûr, un arrangement différent est possible tant que l'élément 404 à mémoire de forme déplace le moyen d'obturation 312 selon sa température.

Dans le mode de réalisation de l'invention présenté sur la figure 3, le système d'actionnement 350 comporte un ressort de rappel 412 qui est arrangé autour du caloduc 402 entre le coulisseau 406 et une deuxième butée 414 fixe du système d'actionnement 350 et qui génère une force de poussée inverse à celle générée par l'élément 404 à mémoire de forme lors d'une augmentation de sa température. Ici, la butée 414 est disposée au niveau d'une deuxième extrémité du caloduc 402.

La figure 2 montre un autre mode de réalisation dans lequel le moyen d'obturation 312 est disposé au niveau de la première sortie 306 et la première extrémité du caloduc 402 plonge dans le deuxième fluide au niveau de la deuxième entrée 308.

L'invention a été plus particulièrement décrite dans le cas d'un turboréacteur 20, mais elle peut s'appliquer à tous types d'installations dans laquelle un échange thermique doit être effectué entre un premier fluide et un deuxième fluide et que la quantité du premier fluide doit être ajustée en fonction de la température du deuxième fluide.

De la même manière, l'invention a été plus particulièrement décrite dans le cadre d'un échange air/huile, mais elle peut s'appliquer à tous types de fluides.

De la même manière, l'invention a été plus particulièrement décrite dans le cadre d'un moyen d'obturation 312 prenant la forme d'un volet, mais le moyen d'obturation 312 peut prendre une autre forme comme par exemple un régulateur de débit du type vanne à boisseau ou encore un diaphragme à iris.

Le matériau utilisé pour réaliser l'élément 404 à mémoire de forme dépendra de la température à partir de laquelle un mouvement du moyen d'obturation 312 est souhaité.

## Revendications

1. Système d'échangeur thermique (300) comportant :
- un échangeur thermique (302) entre un premier fluide et un deuxième fluide, avec une première entrée (304) pour le premier fluide, une première sortie (306) pour le premier fluide, une deuxième entrée (308) pour le deuxième fluide et une deuxième sortie (310) pour le deuxième fluide,
- un moyen d'obturation (312) qui est mobile et agencé pour obturer plus ou moins la première entrée (304) ou la première sortie (306), et
- un système d'actionnement (350) comportant un caloduc (402) fermé et rempli d'un fluide caloporteur et dont une première extrémité plonge dans le deuxième fluide, et un élément (404) à mémoire de forme qui est en contact thermique avec le caloduc (402) et qui est arrangé de manière à déplacer le moyen d'obturation (312) en fonction de sa température, le système d'échangeur thermique (300) étant **caractérisé en ce que** le système d'actionnement (350) comporte un coulisseau (406) qui est solidaire du moyen d'obturation (312) et qui est mobile en translation le long du caloduc (402), et **en ce que** l'élément (404) à mémoire de forme prend la forme d'un ressort de compression qui est arrangé autour du caloduc (402) entre le coulisseau (406) et une première butée (408) fixe.

2. Système d'échangeur thermique (300) selon la revendication 1, **caractérisé en ce que** le système d'actionnement (350) comporte un ressort de rappel (412) qui est arrangé autour du caloduc (402) entre le coulisseau (406) et une deuxième butée (414) fixe et qui génère une force de poussée inverse à celle générée par l'élément (404) à mémoire de forme lors d'une augmentation de sa température.

3. Système d'échangeur thermique (300) selon l'une des revendications 1 à 2, **caractérisé en ce que** la première extrémité du caloduc (402) plonge dans le deuxième fluide au niveau de la deuxième entrée (308).

4. Système d'échangeur thermique (300) selon l'une des revendications 1 à 2, **caractérisé en ce que** la première extrémité du caloduc (402) plonge dans le deuxième fluide au niveau de la deuxième sortie (310).

5. Turboréacteur (20) d'un aéronef (10) comportant un canal de soufflante (30) dans lequel circule un flux d'air extérieur (32), un réseau de canalisations (301a-b) et un système d'échangeur thermique (300) selon l'une des revendications 1 à 4, où l'échangeur thermique (302) est logé dans le canal de soufflante (30), où l'air extérieur (32) constitue le premier fluide et où le réseau de canalisations (301a-b) contient un fluide constituant le deuxième fluide.

6. Turboréacteur (20) selon la revendication 5, **caractérisé en ce que** le deuxième fluide est de l'huile moteur.

7. Aéronef (10) comportant au moins un turboréacteur (20) selon l'une des revendications 5 ou 6.

## Patentansprüche

1. Wärmetauschersystem (300), das aufweist:
- einen Wärmetauscher (302) zwischen einem ersten Fluid und einem zweiten Fluid, mit einem ersten Eingang (304) für das erste Fluid, einem ersten Ausgang (306) für das erste Fluid, einem zweiten Eingang (308) für das zweite Fluid und einem zweiten Ausgang (310) für das zweite Fluid,
- eine Verschlusseinrichtung (312), die beweglich und eingerichtet ist, den ersten Eingang (304) oder den ersten Ausgang (306) mehr oder weniger zu verschließen, und
- ein Betätigungssystem (350), das ein geschlossenes und mit einem Wärmeträgerfluid gefülltes Wärmerohr (402), von dem ein erstes Ende in das zweite Fluid taucht, und ein Element (404) mit Formgedächtnis aufweist, das mit dem Wärmerohr (402) in Wärmekontakt und so angeordnet ist, dass es die Verschlusseinrichtung (312) abhängig von seiner Temperatur verschiebt,
wobei das Wärmetauschersystem (300) **dadurch gekennzeichnet ist, dass** das Betätigungssystem (350) einen Schieber (406) aufweist, der fest mit der Verschlusseinrichtung (312) verbunden und entlang des Wärmerohrs (402) translationsbeweglich ist, und dass das Element (404) mit Formgedächtnis die Form einer Druckfeder annimmt, die um das Wärmerohr (402) herum zwischen dem Schieber (406) und einem ersten ortsfesten Anschlag (408) angeordnet ist.

2. Wärmetauschersystem (300) nach Anspruch 1, **dadurch gekennzeichnet, dass** das Betätigungssystem (350) eine Rückstellfeder (412) aufweist, die um das Wärmerohr (402) herum zwischen dem Schieber (406) und einem zweiten ortsfesten Anschlag (414) angeordnet ist und die eine Schubkraft entgegengesetzt zu derjenigen erzeugt, die vom Element (404) mit Formgedächtnis bei einer Erhöhung seiner Temperatur erzeugt wird.

3. Wärmetauschersystem (300) nach einem der Ansprüche 1 bis 2, **dadurch gekennzeichnet, dass** das erste Ende des Wärmerohrs (402) im Bereich des zweiten Eingangs (308) in das zweite Fluid eintaucht.

4. Wärmetauschersystem (300) nach einem der Ansprüche 1 à 2, **dadurch gekennzeichnet, dass** das erste Ende des Wärmerohrs (402) im Bereich des zweiten Ausgangs (310) in das zweite Fluid taucht.

5. Turbostrahltriebwerk (20) eines Luftfahrzeugs (10), das einen Gebläsekanal (30), in dem ein Außenluftstrom (32) zirkuliert, ein Rohrleitungsnetz (301a-b) und ein Wärmetauschersystem (300) nach einem der Ansprüche 1 bis 4 aufweist, wobei der Wärmetauscher (302) im Gebläsekanal (30) untergebracht ist, wobei die Außenluft (32) das erste Fluid bildet und wobei das Rohrleitungsnetz (301a-b) ein das zweite Fluid bildendes Fluid enthält.

6. Turbostrahltriebwerk (20) nach Anspruch 5, **dadurch gekennzeichnet, dass** das zweite Fluid Motoröl ist.

7. Luftfahrzeug (10), das mindestens ein Turbostrahltriebwerk (20) nach einem der Ansprüche 5 oder 6 aufweist.

## Claims

1. Heat exchanger system (300) comprising:
- a heat exchanger (302) for exchange of heat between a first fluid and a second fluid, having a first inlet (304) for the first fluid, a first outlet (306) for the first fluid, a second inlet (308) for the second fluid, and a second outlet (310) for the second fluid,
- a shut-off means (312) which is able to move and arranged in such a way as to more or less shut off the first inlet (304) or the first outlet (306), and
- an actuating system (350) comprising a closed heat pipe (402) filled with a heat-transfer fluid and of which a first end is immersed in the second fluid, and a shape memory element (404) which is in thermal contact with the heat pipe (402) and which is arranged in such a way as to move the shut-off means (312) according to its temperature, the heat exchanger system (300) being **characterized in that** the actuating system (350) comprises a slide (406) which is secured to the shut-off means (312) and which is able to move translationally along the heat pipe (402), and **in that** the shape memory element (404) takes the form of a compression spring which is arranged around the heat pipe (402) between the slide (406) and a first fixed stop (408).

2. Heat exchanger system (300) according to Claim 1, **characterized in that** the actuating system (350) comprises a return spring (412) which is arranged around the heat pipe (402) between the slide (406) and a second fixed stop (414) and which generates a thrust force that is the opposite of that generated by the shape memory element (404) upon an increase in its temperature.

3. Heat exchanger system (300) according to one of Claims 1 to 2, **characterized in that** the first end of the heat pipe (402) is immersed in the second fluid at the second inlet (308).

4. Heat exchanger system (300) according to one of Claims 1 to 2, **characterized in that** the first end of the heat pipe (402) is immersed in the second fluid at the second outlet (310).

5. Ducted fan turbine engine (20) for an aircraft (10) comprising a fan duct (30) in which an exterior air flow (32) circulates, a network of channels (301a-b) and a heat exchanger system (300) according to one of Claims 1 to 4, in which the heat exchanger (302) is housed in the fan duct (30), in which the exterior air (32) constitutes the first fluid and in which the network of channels (301a-b) contains a fluid constituting the second fluid.

6. Ducted fan turbine engine (20) according to Claim 5, **characterized in that** the second fluid is engine oil.

7. Aircraft (10) comprising at least one ducted fan turbine engine (20) according to one of Claims 5 and 6.
